# EUROPÄISCHE PATENTANMELDUNG

(11) **EP 4 734 023 A1**
(43) Veröffentlichungstag der Anmeldung: **29.04.2026**
(21) Anmeldenummer: 24208448.1
(22) Anmeldetag: 23.10.2024
(51) Int. Cl.: G06Q 10/20, G06Q 30/018, G06Q 50/04, G09F 3/00, G06K 19/00

(54) **COMPUTERIMPLEMENTIERTES VERFAHREN UND SYSTEM ZUM ERSTELLEN EINER GERÄTEKENNZEICHNUNG FÜR EIN GERÄT SOWIE VERFAHREN ZUM ERZEUGEN EINER GERÄTEKENNZEICHNUNG**

(71) Anmelder: Bürkert Werke GmbH & Co. KG, 74653 Ingelfingen (DE)
(72) Erfinder: MÄRZ, Anne, 74653 Ingelfingen (DE)
(74) Vertreter: Prinz & Partner mbB

(57) **Zusammenfassung**

Die Erfindung betrifft ein Verfahren und ein System (10) zum Erstellen einer Gerätekennzeichnung (12) und ein Verfahren zum Erzeugen einer Gerätekennzeichnung (12). Eine Gerätetypbezeichnung (20) wird empfangen. Zumindest eine von der Gerätetypbezeichnung (20) abhängige sicherheits- und/oder betriebsrelevante Information (26) und/oder eine Produktinformation (28) des Geräts (14) wird aus zumindest einer Datenbank (24) ausgelesen. Mindestens ein Inhalt (38) wird unter Berücksichtigung von durch die Gerätetypbezeichnung (20) definierten gerätetypspezifischen Anforderungen erstellt. Zumindest ein Teillayout (42) der Gerätekennzeichnung (12) wird basierend auf der empfangenen Gerätetypbezeichnung (20) aus einer Menge von Teillayouts (42) für unterschiedliche Gerätetypen ausgewählt. Das Teillayout (42) wird abhängig von dem mindestens einen Inhalt (38) und der von der Gerätetypbezeichnung (20) abhängigen sicherheits- und/oder betriebsrelevanten Information (26) und/oder der Produktinformation (28) des Geräts (14) und unter Berücksichtigung des Teillayouts (42) erstellt. Die Gerätekennzeichnung (12) wird derart erstellt, dass der Inhalt (38) entsprechend einer Zielgeometrie des Teillayouts (42) innerhalb des Teillayouts (42) angeordnet wird.

## Beschreibung

Die Erfindung betrifft ein computerimplementiertes Verfahren und ein System zum Erstellen einer Gerätekennzeichnung für ein Gerät. Zudem betrifft die Erfindung ein Verfahren zum Erzeugen einer Gerätekennzeichnung.

Auf einem Gerät, beispielsweise einem Ventil wie einem Prozessventil, müssen verschiedene Informationen angebracht werden. Dies können Verwendungshinweise für das Gerät sein, aber auch Klassifizierungen, Zertifizierungen, Herstellerhinweise, regulatorische Informationen, Kundeninformationen oder ähnliches. Selbstverständlich unterscheiden sich die Informationen auch von Gerät zu Gerät, beispielsweise hinsichtlich einer Seriennummer. Insofern ergibt sich eine Vielzahl von Möglichkeiten hinsichtlich der zu berücksichtigenden Informationen, insbesondere bei einer Vielzahl von Geräten und/oder einer Vielzahl von unterschiedlichen Kunden bzw. Märkten für ein bestimmtes Gerät.

Zudem bedürfen die zu berücksichtigenden Informationen je nach Anwendungsfall verschiedene Ansätze der Aufbringung bzw. Anbringung der Information. Manche Informationen müssen unter anderem Anforderungen hinsichtlich einer bestimmten Beständigkeit in Bezug auf spezifische Betriebsmittel und/oder Abrieb erfüllen. Zusätzliche Kriterien müssen gegebenenfalls ebenfalls berücksichtigt werden, z.B. eine Reproduzierbarkeit und/oder Nachverfolgbarkeit.

Bisherige Ansätze zur Aufbringung der Informationen sind ineffizient und unflexibel. Dies liegt unter anderem daran, dass die Zusammenstellung der benötigten Informationen sowie deren relative Anordnung am Gerät bislang manuell vorgenommen werden mussten. Zusätzlich kann es sein, dass die Informationen während eines Produktlebenszyklus des Geräts aktualisiert werden müssen, beispielsweise da sich die gesetzlichen Regularien geändert haben. Dadurch wird der hohe manuelle Aufwand erneut verursacht, da sich die Zusammenstellung verändert.

Es besteht daher ein Bedürfnis dafür, die entsprechenden Informationen effizienter als bisher für das jeweilige Gerät bereitstellen zu können.

Die Aufgabe wird erfindungsgemäß gelöst durch ein computerimplementiertes Verfahren zum Erstellen einer Gerätekennzeichnung für ein Gerät. Eine Gerätetypbezeichnung des Geräts wird anhand einer Nutzereingabe oder von einer externen Komponente empfangen. Insbesondere wird die Gerätetypbezeichnung von einer das Verfahren ausführenden Regelungsvorrichtung empfangen. Zumindest eine von der Gerätetypbezeichnung abhängige sicherheitsrelevante bzw. betriebsrelevante Information und/oder eine Produktinformation des Geräts wird aus zumindest einer Datenbank ausgelesen, insbesondere durch die Regelungsvorrichtung. Alternativ kann die entsprechende Information derart ausgelesen werden, dass die Regelungsvorrichtung das Auslesen initiiert und die ausgelesene Information erhält. Mindestens ein Inhalt wird basierend auf der Gerätetypbezeichnung und der zumindest einen von der Gerätetypbezeichnung abhängigen sicherheits- und/oder betriebsrelevanten Information und/oder der Produktinformation des Geräts unter Berücksichtigung von durch die Gerätetypbezeichnung definierten gerätetypspezifischen Anforderungen erstellt, insbesondere durch die Regelungsvorrichtung. Zumindest ein Teillayout der Gerätekennzeichnung wird basierend auf der Gerätetypbezeichnung und dem mindestens einen Inhalt erstellt, insbesondere durch die Regelungsvorrichtung. Ein Template des zumindest einen Teillayouts wird beispielsweise aus einer Menge von Templates für Teillayouts für unterschiedliche Gerätetypen ausgewählt. Die Gerätekennzeichnung wird erstellt, insbesondere durch die Regelungsvorrichtung oder zumindest durch diese initiiert. Der mindestens eine erstellte Inhalt wird dabei entsprechend einer Zielgeometrie des zumindest einen erstellten Teillayouts innerhalb des Teillayouts angeordnet.

Das computerimplementierte Verfahren basiert auf der Erkenntnis, dass die Information, die auf das Gerät aufzubringen ist, nicht manuell ausgelesen werden muss und dass das entsprechende Layout, dass die Information umfasst, nicht manuell ausgewählt und erstellt werden muss, um die Gerätekennzeichnung zu erstellen, sondern dass ein automatisiertes Verfahren zur Erstellung der Gerätekennzeichnung genutzt werden kann. Dazu kann eine Regelungsvorrichtung verwendet werden, die eingerichtet ist, das computerimplementierte Verfahren auszuführen. Die Regelungsvorrichtung umfasst hierzu einen Prozessor, der eingerichtet ist, das computerimplementierte Verfahren auszuführen.

Es wird dabei ausgenutzt, dass lediglich die Gerätetypbezeichnung erforderlich ist, um in Abhängigkeit der Gerätetypbezeichnung sämtliche Verfahrensschritte automatisiert ausführen zu können. Dementsprechend wird die Gerätetypbezeichnung als Codierung innerhalb des Verfahrens genutzt, um beispielsweise festzustellen, welche Information zu verwenden und welches Teillayout zu nutzen ist. Dadurch sind die Voraussetzungen zum Erstellen der Gerätekennzeichnung erfüllt, sodass der Inhalt entsprechend dem Teillayout lediglich noch innerhalb des Teillayouts entsprechend der Zielgeometrie angeordnet werden muss, die vom Gerätetyp abhängen, insbesondere des aufgrund des Gerätetyps zur Verfügung stehenden Platzes.

Vorteilhaft benötigt das Verfahren maximal eine Nutzereingabe, was einen geringen manuellen Aufwand bedeutet, um zur endgültigen Gerätekennzeichnung zu gelangen. Jedoch kann die Gerätetypbezeichnung alternativ zur Nutzereingabe auch durch eine externe Komponente übermittelt werden, sodass das Verfahren ohne jeglichen manuellen Aufwand ausführbar ist. Dadurch wird eine effiziente Möglichkeit geschaffen, die Gerätekennzeichnung für das Gerät zu erstellen, insbesondere für mehrere unterschiedliche Geräte.

Da das Verfahren, mit Ausnahme der Nutzereingabe hinsichtlich der Gerätetypbezeichnung keine manuelle Interaktion benötigt, weist das Verfahren gegenüber bisherigen Ansätzen auch eine verringerte Fehleranfälligkeit auf. Als Folge wird eine reduzierte Fehlerquote erzielt, was zu weniger Ausschuss führt, wodurch die Gesamtkosten gesenkt werden können.

Durch die sicherheits- bzw. betriebsrelevante Information und/oder die Produktinformation des Geräts, die in der erstellten Gerätekennzeichnung berücksichtigt wird, kann die entsprechende Information auf das Gerät selbst oder auf einem dem Gerät zugeordneten Informationsträger in Form der Gerätekennzeichnung physisch aufgebracht werden, um so bei der Verwendung des Geräts vorzuliegen. Dadurch gewährleistet das Verfahren, dass die Gerätekennzeichnung derart erstellt wird, dass alle für das jeweilige Gerät erforderlichen Informationen vor Ort zur Verfügung stehen, wenn das Gerät verwendet wird.

Es wird also eine digital hinterlegte Information ausgelesen und als Teil der physischen Gerätekennzeichnung verwendet, um damit das Gerät physisch zu kennzeichnen.

Unter der Gerätekennzeichnung kann daher eine physische Markierung des Geräts verstanden werden. Die Markierung stellt sicher, dass das Gerät die betreffenden Informationen aufweist, da die Markierung auf das Gerät aufgebracht oder daran angebracht wird. Typischerweise ist die Markierung dabei zumindest beständig für die geplante Lebensdauer des Geräts. In einer einfachen Ausführungsform kann es sich bei der Gerätekennzeichnung um ein Label handeln, auf das Informationen aufgedruckt sind, die das entsprechende Gerät betreffen, wobei das Label auf eine Außenoberfläche des Geräts aufgeklebt oder in ähnlicher Weise daran angebracht wird.

Die Gerättypbezeichnung stellt eine Codierung des zu kennzeichnenden Geräts dar, die unter anderem festlegt, von welchem Typ das Gerät ist. Der Typ schließt hierbei sowohl den Komponententyp ein, beispielsweise ein Ventil oder einen Sensor, und optional ebenfalls andere das Gerät kennzeichnende Parameter, wie einen Revisionstyp oder einen spezifischen Ausgestaltungstyp. Beispielsweise gibt es unterschiedliche Ventiltypen, so etwa ein 2-Wege-Ventil und ein 3-Wege-Ventil, die unterschiedliche Informationen auf dem jeweiligen Gerät erfordern. Ebenso können die jeweiligen Geräte hinsichtlich der internen Komponenten anders ausgebildet sein, obwohl das Gehäuse gleich ist. Dieser Unterschied wird ebenfalls bei der Gerättypbezeichnung berücksichtigt. Es kann aufgrund der Gerättypbezeichnung auch bereits das Anwendungsgebiet für das Gerät definiert werden, beispielsweise das entsprechende Land, in dem das Gerät zum Einsatz kommen soll. Das Gerät ist in jedem Fall durch die Gerätetypbezeichnung dahingehend charakterisiert, dass dadurch klar ist, welche Informationen in der Gerätekennzeichnung zu berücksichtigen sind, welches Teillayout hinsichtlich der spezifischen Geräts zu verwenden ist und welches Teillayout mit welcher Information zu berücksichtigen ist.

Empfängt die Regelungsvorrichtung die Gerätetypbezeichnung von einer externen Komponente, so erfolgt dies typischerweise anhand einer Mitteilung bzw. eines Signals. Die externe Komponente kann eine Prozessleitstelle sein.

Der Inhalt bezeichnet die Gesamtmenge der zur Erstellung der Gerätekennzeichnung vorgesehenen Informationen, die zumindest die aus der Datenbank ausgelesenen Informationen umfasst, also die sicherheits- bzw. betriebsrelevante Information und/oder die Produktinformation des Geräts.

Unter dem Erstellen des Teillayouts kann verstanden werden, dass die dem Inhalt zugrundeliegenden Informationen entsprechend relativ zueinander gewichtet werden, um die verschiedenen Informationen zu priorisieren, insbesondere hinsichtlich der jeweiligen Größe und/oder Anordnung der einzelnen Informationen. Hierdurch kann sichergestellt werden, dass die dem Inhalt zugrundeliegenden Informationen in gewünschter Weise an- bzw. aufgebracht werden können. Beispielsweise wird hierbei berücksichtigt, dass eine sicherheits- und/oder betriebsrelevante Information eine Mindestgröße aufweist, wohingegen eine Produktinformation unter Umständen eine kleinere Größe aufweist.

Demgegenüber zeichnet das Erstellen der Gerätekennzeichnung die tatsächliche Dimensionierung der einzelnen Informationen innerhalb des zumindest Teillayouts dar, wobei die Zielgeometrie berücksichtigt wird, welche vom Gerätetyp abhängt, insbesondere dem aufgrund des Gerätetyps zur Verfügung stehenden Platzes. Die Zielgeometrie definiert den tatsächlich vorhandenen Platz für den entsprechenden Inhalt, wobei der Inhalt unterschiedliche Informationen umfassen kann, die unterschiedliche Anforderungen haben, bspw. hinsichtlich der Mindestgröße, um eine Lesbarkeit gewährleisten zu können.

Die die sicherheits- und/oder betriebsrelevante Information und/oder die Produktinformation des Geräts können aus einer Datenbank ausgelesen werden, wobei die Datenbank Teil einer Geschäftsressourcenplanung ("Enterprise Resource Planing" - ERP) bzw. eines Produktlebenszyklusmanagements ("Product-Lifecycle-Management" - PLM) ist.

Gemäß einem Aspekt kann die sicherheitsrelevante und/oder betriebsrelevante Information und/oder die Produktinformation basierend auf einem von der Gerätetypbezeichnung abhängigen ersten Regelwerk aus einer durch das Regelwerk spezifizierten Datenbank ausgelesen werden, insbesondere durch die Regelungsvorrichtung. Hierbei wird ausgenutzt, dass die Gerätetypbezeichnung sämtliche zu berücksichtigenden Informationen hinsichtlich eines spezifischen Geräts codiert. Dadurch kann ein Regelwerk genutzt werden, um die Informationen aus einer entsprechenden Datenbank auszulesen. Dies ermöglicht, dass in den Datenbanken aktualisierte Informationen berücksichtigt werden können, beispielsweise im Rahmen einer Produktrevision oder im Rahmen geänderter gesetzlicher Regularien. Das Verfahren muss dann nicht adaptiert werden, um dennoch die zutreffenden bzw. aktuellen Informationen auszulesen. Insbesondere entfällt die Notwendigkeit einer manuellen Anpassung des Verfahrens.

In einigen Ausführungsformen kann der zumindest eine erstellte Inhalt basierend auf einem von der Gerätetypbezeichnung abhängigen zweiten Regelwerk innerhalb des Teillayouts entsprechend der Zielgeometrie angeordnet werden. Auch hier wird ausgenutzt, dass die Gerätetypbezeichnung die Anordnung des Inhalts hinsichtlich des spezifischen Teillayouts codiert. Beispielsweise können für den Inhalt Relativkoordinaten und/oder Abmessungen innerhalb des Teillayouts codiert sein, wie zuvor schon erläutert. Ändern sich die das Gerät betreffenden Informationen, beispielsweise im Rahmen einer Produktaktualisierung, so wird durch das zweite Regelwerk gewährleistet, dass das Layout generell gleichbleiben kann, auch wenn die Informationen variieren. Dies ermöglicht ebenfalls, dass manuelle Anpassungen unnötig sind.

Es kann auch der mindestens eine Inhalt basierend auf der Gerättypbezeichnung unter Berücksichtigung von durch die Gerätetypbezeichnung definierten gerätetypspezifischen Anforderungen basierend auf einem Regelwerk erstellt werden, beispielsweise einem dritten Regelwerk.

Gemäß einem weiteren Aspekt kann ein Template für das zumindest eine Teillayout basierend auf der empfangenen Gerätetypbezeichnung ausgewählt werden, beispielsweise einem vierten Regelwerk.

Optional kann auch das zumindest eine Teillayout der Gerätekennzeichnung abhängig von einem entsprechenden Regelwerk erstellt werden, beispielsweise einem fünften Regelwerk. Das entsprechende Regelwerk kann also genutzt werden, um anzugeben, wie der Inhalt innerhalb des ausgewählten Teillayouts, also des entsprechenden Templates, zu berücksichtigen ist. Dabei ist zu berücksichtigen, dass der Inhalt nicht notwendigerweise auf ein einzelnes Teillayout beschränkt ist.

Führen Produktrevisionen oder andere Umstände dazu, dass die geräteabhängigen Informationen in der Datenbank aktualisiert werden, sich Teillayouts ändern oder Inhalte anders berücksichtigt werden müssen, so ermöglichen die Regelwerke, dass die Gerätekennzeichnung ohne Adaptierung des Verfahrens erstellt werden kann. Dadurch gewährleistet das Verfahren eine hohe Effizienz, da ein entsprechend hoher Automatisierungsgrad für das Erstellen der Gerätekennzeichnung sichergestellt ist.

Selbstverständlich können mehrere der Regelwerke innerhalb eines gemeinsamen Regelwerks, insbesondere alle Regelwerke innerhalb eines einzelnen Gesamtregelwerks, berücksichtigt werden.

In einigen Ausführungsformen können Spezifikationen des Geräts basierend auf der Gerätetypbezeichnung aus zumindest einer Datenbank ausgelesen werden, insbesondere durch die Regelungsvorrichtung. Die Spezifikationen des Geräts geben zumindest die Zielgeometrie des Teillayouts der Gerätekennzeichnung vor. In anderen Worten geben die Spezifikationen des Geräts an, inwieweit das Gerät mit einer Gerätekennzeichnung entsprechend einem spezifischen Teillayout versehen werden kann. Dadurch wird die Kompatibilität der Gerätekennzeichnung mit dem tatsächlichen Gerät gewährleistet.

Bevorzugt kann die Zielgeometrie Abmessungen des Teillayouts und/oder eine beim Erstellen der Gerätekennzeichnung vorzusehende Produktionstechnik angeben. Anders ausgedrückt geben die Spezifikationen an, inwieweit Informationen auf das Gerät aufgebracht werden können, beispielsweise hinsichtlich welcher Bereiche, insbesondere des zur Verfügung stehenden Platzes für die Gerätekennzeichnung, und auf welche Art und Weise. Dadurch wird die Kompatibilität zwischen dem Gerät und der Gerätekennzeichnung unter Berücksichtigung des Verwendungszwecks des Geräts gewährleistet.

Die vorzusehende Produktionstechnik kann ein Druckverfahren, ein Nadeln, ein Ätzen, ein Lasern oder ein Prägen umfassen. Dadurch können unterschiedliche Anforderungen und eine hohe Variabilität gewährleistet werden. Da die vorzusehende Produktionstechnik innerhalb des Verfahrens spezifiziert wird, entfällt der manuelle Aufwand zur Ermittlung einer geeigneten Produktionstechnik und der hiermit einhergehenden Anforderungen.

Optional kann das zumindest eine Teillayout zumindest auch basierend auf einer vorzusehenden Produktionstechnik erstellt werden, insbesondere das Template für das zumindest eine Teillayout entsprechend ausgewählt werden. Die vorzusehende Produktionstechnik hängt von der empfangenen Gerätetypbezeichnung ab. Durch die vorzusehende Produktionstechnik ergeben sich Anforderungen an das Teillayout, die bei der Auswahl bzw. beim Erstellen des passenden Teillayouts zu berücksichtigen sind. Daher wird durch die Abhängigkeit des Teillayouts von der vorzusehenden Produktionstechnik die erforderliche Kompatibilität gewährleistet. Die Produktionstechnik kann unter anderem eine Mindestauflösung vorgeben, was mit einer entsprechenden Mindestgröße für die Informationen einhergeht. Dies wird dann entsprechend beim Erstellen der Gerätekennzeichnung berücksichtigt.

Gemäß einem Aspekt kann hinsichtlich der zumindest einen von der Gerätetypbezeichnung abhängigen sicherheits- und/oder betriebsrelevanten Information und/oder der Produktinformation eine Territorialinformation berücksichtigt werden. Die Territorialinformation gibt an, für welches Territorium, Region bzw. Land ein Gerät vorgesehen ist. In unterschiedlichen Ländern können die Anforderungen an die auf das Gerät aufzubringenden Informationen voneinander abweichen. Beispielsweise können die jeweiligen gesetzlichen Regularien dazu führen, dass in einigen Ländern andere Informationen auf das Gerät aufzubringen sind als in anderen Ländern. Das führt dazu, dass auch die auszulesenden Informationen auf Basis der Territorialinformation codiert sind. Im Rahmen des Regelwerks kann dies berücksichtigt werden, um zutreffende Informationen auszulesen. Ferner kann die Territorialinformation genutzt werden, um die Sprache des in der Gerätekennzeichnung enthaltenden Inhalts zu definieren, also die Sprache der Informationen, die den Inhalt bilden.

Alternativ oder kumulativ kann der zumindest eine erstellte Inhalt in einem von der Territorialinformation abhängigen Teillayout entsprechend einer von der Territorialinformation abhängigen Zielgeometrie angeordnet werden. Da die zu berücksichtigenden Informationen in Abhängigkeit der Territorialinformation voneinander abweichen, kann dies dazu führen, dass die abweichenden Informationen in einem generell gleichen Teillayout (beispielsweise gleiche äußere Abmessungen) auf unterschiedliche Weise anzuordnen sind, damit die Kompatibilität mit dem Teillayout gewährleistet wird. Beispielsweise führen unterschiedliche Sprachen, die durch jeweilige Territorialinformationen codiert sein können, bei ansonsten unangepassten Eigenschaften (Schriftgröße, Zeilenabstand, Zeichenabstand, etc.), zu einem unterschiedlichen Platzbedarf, um eine bestimmte Information vermitteln zu können. Durch die Berücksichtigung der Territorialinformation werden kompatible Anordnungen gewährleistet.

Bevorzugt kann die Territorialinformation eine zu berücksichtigende Sprache der auszulesenden Information angeben. Dann kann die Territorialinformation auch dazu genutzt werden, eine Übersetzung von ausgelesenen Informationen in die entsprechende, durch die Territorialinformation codierte Sprache vorzusehen. Es kann sich die Situation ergeben, dass spezifische, auszulesende Informationen in einer Datenbank nicht in einer Sprache verfügbar sind, die der Sprache der Territorialinformation entspricht. In diesem Fall kann die Information übersetzt werden, um eine Kompatibilität mit der Territorialinformation zu gewährleisten. Hierzu kann eine automatisierte Maschinenübersetzung der jeweiligen Information genutzt werden, um den Automatisierungsgrad weiter zu erhöhen. Die Übersetzung kann hierzu von der Regelungsvorrichtung durchgeführt oder ausgelöst werden, die dazu einen Übersetzungsalgorithmus nutzen kann. Dadurch wird eine hohe Variabilität des Verfahrens gewährleistet, da kein manueller Übersetzungsaufwand besteht.

Optional können die hinsichtlich der Territorialinformation codierten sicherheits- und/oder betriebsrelevanten Informationen und/oder die Produktinformationen auch in unterschiedlichen Datenbanken hinterlegt sein. Beispielsweise können je nach Territorium unterschiedliche Datenbanken vorgesehen sein, die spezifische, das Gerät betreffende Informationen aufweisen. Dies kann im Rahmen des Regelwerks berücksichtigt werden, für das die Territorialinformation eine zusätzliche Codierungsebene darstellt.

Selbstverständlich kann auch eine einzelne Datenbank vorgesehen sein, die die Informationen hinsichtlich unterschiedlicher Territorialinformationen aufweist, beispielsweise hinsichtlich unterschiedlicher Sprachen.

Bevorzugt kann die Territorialinformation der Regelungsvorrichtung separat zur Gerätetypbezeichnung oder als Teil der Gerätetypbezeichnung zur Verfügung gestellt werden.

Optional kann das Teillayout zumindest Relativpositionen, Abmessungen und Farben für den zumindest einen erstellten Inhalt umfassen. Dadurch wird durch das Teillayout spezifiziert, in welcher Weise der erstellte Inhalt in dem Teillayout zu berücksichtigen ist.

Gemäß einem Aspekt kann zusätzlich zumindest eine von der Gerätetypbezeichnung abhängige herstellerspezifizierte und/oder kundenspezifizierte Information aus zumindest einer Datenbank ausgelesen und in dem Teillayout der Gerätekennzeichnung angeordnet werden. Dadurch kann das Teillayout durch den Hersteller oder den Nutzer des Geräts und/oder des Verfahrens personalisiert bzw. individualisiert werden, beispielsweise hinsichtlich eines Data Matrix Codes und/oder eines Herstellerlogos. Die entsprechenden Informationen des Herstellers oder Nutzers des Geräts können über eine Schnittstelle abgerufen werden oder über eine Schnittstelle durch den Hersteller oder Nutzer zur Verfügung gestellt werden.

In einigen Ausführungsformen kann die Gerätekennzeichnung basierend auf mehreren Teillayouts erstellt werden. Die mehreren Teillayouts weisen zumindest gemeinschaftlich die sicherheitsrelevante und/oder betriebsrelevante Information und/oder die Produktinformation auf. Dadurch wird eine Kompatibilität mit Geräten gewährleistet, die keinen einzelnen Geräteabschnitt aufweisen, in dem sämtliche Informationen einheitlich berücksichtigt werden können, sondern bei denen die Informationen in Bezug auf unterschiedliche Geräteabschnitte zu berücksichtigen sein, optional beispielsweise auch mit abweichenden Eigenschaften der Teillayouts, wie unterschiedlichen Produktionstechniken. Die mehreren Teillayouts können unterschiedlichen Seiten des Geräts zugeordnet sein.

Bevorzugt können die Schritte, abgesehen von der Nutzereingabe, automatisch ausgeführt werden. Dies spiegelt die hohe Prozessautomatisierung wider, die das computerimplementierte Verfahren ermöglicht. Das bedeutet, dass das Verfahren je nach Wunsch oder nach Anforderung, beispielsweise wenn sich Informationen geändert haben, in automatisierter Weise wiederholt werden kann. Dadurch kann eine aktualisierte Gerätekennzeichnung im Wesentlichen ohne Zeitverzögerung erhalten werden.

Optional kann die Gerätekennzeichnung als Datensatz an eine Produktionsvorrichtung übermittelt werden. Die Produktionsvorrichtung kann die als Datensatz empfangene Gerätekennzeichnung mit zumindest einer und optional mit mehreren oder allen der zuvor erwähnten Produktionstechniken physisch erstellen.

Bevorzugt wird der Datensatz nur dann an die Produktionsvorrichtung übermittelt, wenn die Gerätekennzeichnung zuvor durch eine Freigabe bestätigt worden ist, bspw. eine Nutzerfreigabe oder durch eine externe Komponente. Dadurch wird eine Kontrollinstanz geschaffen, die nutzbar ist, um die zu diesem Zeitpunkt als Datensatz vorliegende erstellte Gerätekennzeichnung zu begutachten und freizugeben. So können fehlerhaft erstellte Gerätekennzeichnungen identifiziert und von der tatsächlichen Produktion ausgeschlossen werden, sodass die Menge an Ausschuss reduziert wird. Die externe Komponente kann beim Hersteller des Geräts oder beim Kunden des Geräts vorgesehen sein, sodass der Hersteller bzw. Kunde die Gerätekennzeichnung freigeben kann. Hierdurch kann der Hersteller bzw. Kunde sicherstellen, dass die hersteller- und/oder kundenspezifizierte Information in gewünschter Weise in der Gerätekennzeichnung integriert worden ist. Dies liegt insbesondere daran, dass die hersteller- und/oder kundenspezifizierte Information typischerweise eine geringere Gewichtung als die sicherheits- und/oder betriebsrelevante Information hat, wodurch die hersteller- und/oder kundenspezifizierte Information im Zweifelsfall eine kleinere Dimensionierung aufweist.

Es kann grundsätzlich auch vorgesehen sein, dass die hersteller- und/oder kundenspezifizierte Information in einem maschinenlesbaren Code innerhalb der Gerätekennzeichnung vorgesehen wird, beispielsweise als QR-Code. Dies kann dann der Fall sein, wenn zu viele Informationen berücksichtigt werden sollen, die nicht innerhalb des zur Verfügung stehenden Platzes untergebracht werden können. In dem Fall wird die sicherheits- und/oder betriebsrelevante Information mit höchster Priorität bei der Gerätekennzeichnung behandelt, sodass diese in jedem Fall physisch am Gerät vorliegt, wohingegen die hersteller- und/oder kundenspezifizierte Information unter Umständen nicht physisch menschenlesbar am Gerät vorliegt, sondern nur als maschinenlesbarer Code.

Gemäß einem weiteren Aspekt betrifft die Erfindung auch ein Computerprogrammprodukt, umfassend Befehle, die bei der Ausführung des Computerprogrammprodukts durch einen Prozessor diesen dazu veranlassen, das zuvor beschriebene Verfahren zumindest teilweise auszuführen oder zumindest auszulösen, insbesondere sämtliche Schritte nach dem Empfangen der Gerätetypbezeichnung auszuführen.

Gemäß einem weiteren Aspekt betrifft die Erfindung auch ein computerlesbares Speichermedium, umfassend Befehle, die bei der Ausführung der Befehle des computerlesbaren Speichermediums durch einen Prozessor diesen dazu veranlassen, das zuvor beschriebene Verfahren zumindest teilweise auszuführen oder zumindest auszulösen, insbesondere sämtliche Schritte nach dem Empfangen der Gerätetypbezeichnung auszuführen.

Gemäß einem weiteren Aspekt betreffen einige Ausführungsformen der Erfindung ein Verfahren zum Erzeugen einer Gerätekennzeichnung. Die Gerätekennzeichnung wird gemäß dem zuvor beschriebenen computerimplementierten Verfahren erstellt. Die Gerätekennzeichnung wird im Rahmen des Verfahrens auf einem dem Gerät zugeordneten Informationsträger oder auf dem Gerät selbst erzeugt, also physisch hergestellt. Wird die Gerätekennzeichnung auf dem Gerät selbst erzeugt, so weist die Gerätekennzeichnung typischerweise eine hohe Beständigkeit auf. Beispielsweise wird die Gerätekennzeichnung auf einem Gehäuse des Geräts aufgebracht. Durch einen dem Gerät zugeordneten Informationsträger wird eine Austauschbarkeit gewährleistet, da der Informationsträger typischerweise leichter ausgetauscht werden kann also das Gehäuse des Geräts, wenn aktualisierte, das Gerät betreffende Informationen vorliegen, die die Erzeugung einer aktualisierten Gerätekennzeichnung erforderlich machen sollten. Der Informationsträger kann ein Label oder Klebeetikett sein. Der Informationsträger kann aber auch ein lös- bzw. wechselbares Gehäuseteil sein, was mit dem Hauptgehäuse koppelbar ist, beispielsweise einsetz-, einclips- oder einschiebbar ist.

Gemäß einem zusätzlichen Aspekt betreffen einige Ausführungsformen der Erfindung ein System zum Erstellen einer Gerätekennzeichnung für ein Gerät. Das System weist eine Regelungsvorrichtung auf, die eingerichtet ist,
- eine Gerätetypbezeichnung des Geräts anhand einer Nutzereingabe oder durch eine externe Komponente zu empfangen;
- zumindest eine von der Gerätetypbezeichnung abhängige sicherheitsrelevante und/oder betriebsrelevante Information und/oder eine Produktinformation des Geräts aus zumindest einer Datenbank auszulesen;
- mindestens einen Inhalt basierend auf der Gerätetypbezeichnung und der zumindest einen von der Gerätetypbezeichnung abhängigen sicherheitsrelevanten und/oder betriebsrelevanten Information und/oder der Produktinformation des Geräts unter Berücksichtigung von durch die Gerätetypbezeichnung definierten gerätetypspezifischen Anforderungen zu erstellen;
- zumindest ein Teillayout der Gerätekennzeichnung basierend auf der Gerätetypbezeichnung und dem mindestens einen Inhalt zu erstellen; und
- die Gerätekennzeichnung derart zu erstellen, dass der zumindest eine erstellte Inhalt entsprechend einer Zielgeometrie des zumindest einen erstellten Teillayouts innerhalb des Teillayouts angeordnet wird.

Die Vorteile, die durch das zuvor beschriebene Verfahren erreicht werden, werden in entsprechender Weise auch durch das System erzielt. Insbesondere wird durch die Regelungsvorrichtung eine Topologie bereitgestellt, die die Gerätekennzeichnung automatisiert einschließlich entsprechender Informationen und zumindest eines entsprechenden Teillayouts basierend auf der empfangenen Gerätetypbezeichnung erstellen kann. Wie zuvor beschrieben, kann die Regelungsvorrichtung eingerichtet sein, ein Template für das zumindest eine Teillayout aus einer Menge von Templates für Teillayouts für unterschiedliche Gerätetypen auszuwählen.

Bevorzugt kann das Gerät ein Feldgerät, ein Sensor, eine Messeinheit, ein Sensor-Aktor-System, eine Prozesskomponente oder dergleichen sein. Wesentlich ist lediglich, dass das Gerät eine Gerätekennzeichnung aufweisen soll oder muss, um dem Nutzer zumindest spezifische Informationen des Geräts zur Verfügung zu stellen.

Weitere Vorteile und Eigenschaften der Erfindung ergeben sich aus der nachfolgenden Beschreibung und den Zeichnungen, auf die Bezug genommen wird. In den Zeichnungen zeigen:
- Fig. 1 ein System zum Erstellen einer Gerätekennzeichnung für ein Gerät gemäß einer beispielhaften Ausführungsform,
- Fig. 2 ein computerimplementiertes Verfahren zum Erstellen einer Gerätekennzeichnung für ein Gerät gemäß einer beispielhaften Ausführungsform, und
- Fig. 3 ein Verfahren zum Erzeugen einer Gerätekennzeichnung gemäß einer beispielhaften Ausführungsform.

Alle nachstehend in Bezug auf die Ausführungsbeispiele und/oder die begleitenden Figuren genannten Merkmale können allein oder in einer beliebigen Unterkombination miteinander kombiniert werden.

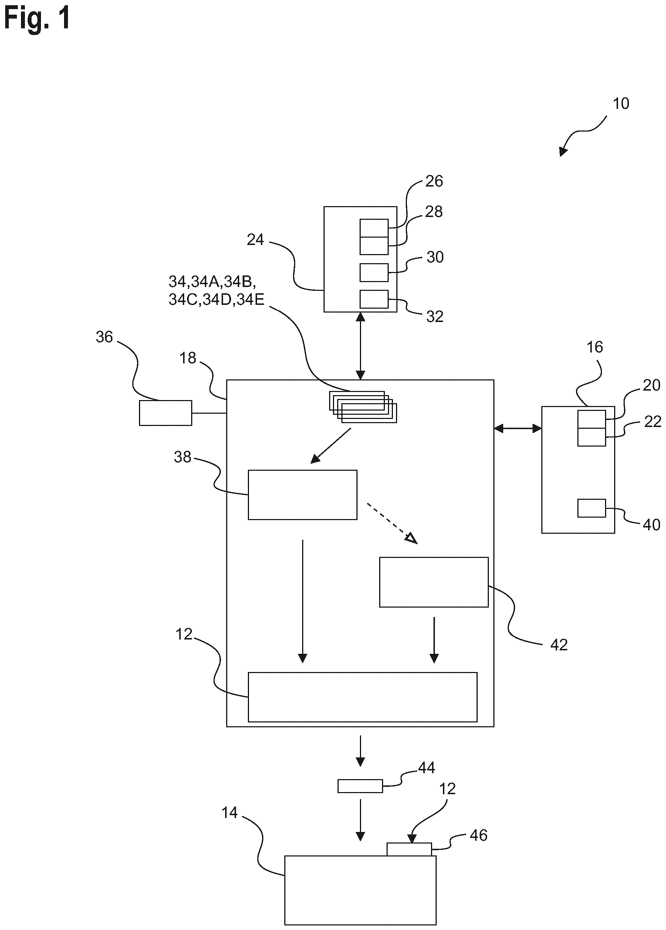

Fig. 1 zeigt ein System 10 zum Erstellen einer Gerätekennzeichnung 12 für ein Gerät 14 gemäß einer Ausführungsform. Die Darstellung zeigt die wesentlichen Komponenten des Systems 10 und den schematischen Interaktionsablauf zwischen den Komponenten, um die Gerätekennzeichnung 12 zu erstellen. Schlussendlich ist die Gerätekennzeichnung 12 auf das Gerät 14 aufzubringen.

Das System 10 weist eine Kommunikationsschnittstelle 16 und eine Regelungsvorrichtung 18 auf, die mit der Kommunikationsschnittstelle 16 gekoppelt ist. Die Kommunikationsschnittstelle 16 ist eingerichtet, Nutzereingaben und/oder Mitteilungen bzw. Signale von einer externen Komponente zu empfangen, beispielsweise von einer Leitstelle.

Die Kommunikationsschnittstelle 16 ist grundsätzlich eingerichtet, eine Gerätetypbezeichnung 20 zu empfangen, die an die Regelungsvorrichtung 18 übermittelt wird. Zusätzlich ist die Kommunikationsschnittstelle 16 eingerichtet, eine an die Regelungsvorrichtung 18 übermittelte Territorialinformation 22 zu empfangen. Die Territorialinformation 22 gibt an, für welches Territorium das Gerät 14 vorgesehen oder auszulegen ist, also für welches Land bzw. für welche Region.

Beispielsweise kann durch die Territorialinformation 22 eine Sprache codiert sein, die beim Erstellen der Gerätekennzeichnung 12 zu berücksichtigen ist.

Grundsätzlich kann die Territorialinformation 22 auch bereits in der Gerätetypbezeichnung 20 enthalten sein, sodass die Territorialinformation 22 nicht zwingend als separate Information bzw. als separater Datensatz zur Verfügung gestellt werden muss.

Das System 10 weist ferner wenigstens eine Datenbank 24 auf, die mit der Regelungsvorrichtung 18 gekoppelt ist. Die Regelungsvorrichtung 18 ist eingerichtet, um aus der Datenbank 24 sicherheitsrelevante und/oder betriebsrelevante Informationen 26 für das Gerät 14 auszulesen. Ebenso können aus der Datenbank 24 Produktinformationen 28 für das Gerät 14 ausgelesen werden.

Die Datenbank 24 kann die sicherheitsrelevanten und/oder betriebsrelevanten Informationen 26 und/oder die Produktinformation 28 abhängig von der Territorialinformation 22 aufweisen. Beispielsweise können die entsprechenden Informationen in unterschiedlichen Sprachen hinterlegt sein, oder es können abweichende Informationen für unterschiedliche Territorialinformationen 22 in der Datenbank 24 hinterlegt sein.

In einer (nicht-dargestellten) Alternative können unterschiedliche Datenbanken 24 vorgesehen sein, die jeweils entsprechende Informationen für unterschiedliche Territorialinformationen 22 unabhängig voneinander aufweisen.

Zusätzlich ist die Regelungsvorrichtung 18 eingerichtet, um aus der Datenbank 24 Spezifikationen 30 des Geräts 14 auszulesen. Die Spezifikationen 30 geben zumindest eine Zielgeometrie an, die bei der Erstellung eines Teillayouts der Gerätekennzeichnung 12 für das Gerät 14 zu berücksichtigen ist.

Die Regelungsvorrichtung 18 ist eingerichtet, um aus der Datenbank 24 herstellerspezifische und/oder kundenspezifische Informationen 32 das Gerät 14 betreffend auszulesen. Bei den herstellerspezifischen und/oder kundenspezifischen Informationen 32 kann es sich um Informationen handeln, mittels denen eine Individualisierung des Geräts 14 möglich ist. Beispielsweise kann ein Hersteller- bzw. Kundenlogo vorgesehen werden.

Auch wenn die hier dargestellte Ausführungsform des Systems 10 lediglich eine einzelne Datenbank 24 aufweist, in der alle Informationen, also die sicherheits- bzw. betriebsrelevante Information 26, die Produktinformation 28, die Spezifikationen 30 und die hersteller- bzw. kundenspezifische Information 32 hinterlegt sind, können diese Informationen auch in unterschiedlichen Datenbanken 24 gespeichert sein. Beispielsweise kann es durch eine Aufsichtsbehörde betriebene separate Datenbanken 24 geben, in der bestimmte, das Gerät 14 betreffende sicherheitsrelevante und/oder betriebsrelevante Information 26 gespeichert sind, wie eine Zulassungsnummer oder ähnliche.

Ferner kann eine separate Schnittstelle, insbesondere eine Programmierschnittstelle ("application programming interface" - API) für den Hersteller bzw. Kunden vorgesehen sein, über die die hersteller- bzw. kundenspezifische Information 32 abgerufen oder der Regelungsvorrichtung 18 zur Verfügung gestellt wird.

Die Regelungsweise der Regelungsvorrichtung 18 wird durch ein Regelwerk 34 definiert, das von der Regelungsvorrichtung 18 genutzt wird. Beispielsweise ist das Regelwerk 34 in der Regelungsvorrichtung 18 hinterlegt, insbesondere als Software.

In einer Alternative kann das Regelwerk 34 auch extern zur Regelungsvorrichtung 18 ausgebildet sein, sodass die Regelungsvorrichtung 18 auf das externe Regelwerk 34 zugreift, um zu ermitteln, welche Handlungen durch die Regelungsvorrichtung 18 vorzunehmen sind. Beispielhaft kann das Regelwerk 34 in einem mit der Regelungsvorrichtung 18 gekoppelten Datenspeicher gespeichert sein.

Im Allgemeinen kann das Regelwerk 34 mehrere untergeordnete Regelwerke34A bis 34E aufweisen, auch Subregelwerke genannt. Die Subregelwerke 34A bis 34E definieren in Summe, wie sich die Regelungsvorrichtung 18 zu verhalten hat, wobei jedes Subregelwerk 34A bis 34E für sich einen Aspekt definiert.

Das System 10 umfasst gemäß dieser Ausführungsform zusätzlich einen Übersetzungsalgorithmus 36, mit dem die Regelungsvorrichtung 18 gekoppelt ist. Dadurch wird die Regelungsvorrichtung 18 in die Lage versetzt, aus der Datenbank 24 ausgelesene Informationen in eine Sprache zu übersetzen, die durch die Territorialinformation 22 festgelegt ist, sofern die Informationen durch die Datenbank 24 nicht in der entsprechenden Sprache bereits bereitgestellt werden können. Dies ermöglicht die automatische Anpassung der ausgelesenen Informationen durch die Regelungsvorrichtung 18 hinsichtlich der zu verwendenden Sprache.

Die Regelungsvorrichtung 18 ist bidirektional mit der Kommunikationsschnittstelle 16 gekoppelt. Dadurch ist es der Regelungsvorrichtung 18 möglich, einen Datensatz an die Kommunikationsschnittstelle 16 zu übermitteln, der die für die Gerätekennzeichnung 12 vorgesehenen Informationen umfasst, insbesondere in der entsprechenden Sprache. Dieser Datensatz entspricht also wenigstens einem Inhalt 38 der Gerätekennzeichnung 12, da dieser die Informationen der Gerätekennzeichnung 12 umfasst. Mit anderen Worten erstellt die Regelungsvorrichtung 18 aufgrund des Regelwerks 34 den Inhalt 38 basierend auf der Gerätetypbezeichnung 20 und der sicherheits- bzw. betriebsrelevanten Information 26 und/oder der Produktinformation 28 des Geräts 14, wobei durch die Gerätetypbezeichnung 20 definierte gerätetypspezifische Anforderungen berücksichtigt werden.

In der Folge kann der Datensatz mittels einer Freigabe 40 für die Regelungsvorrichtung 18 freigegeben werden. Diese Freigabe 40 stellt zu diesem Zeitpunkt jedoch nur einen optionalen Schritt dar, wie nachfolgend noch erläutert wird.

Typischerweise erstellt die Regelungsvorrichtung 18 zunächst ein Teillayout 42 der Gerätekennzeichnung 12 in digitaler Weise, indem der Inhalt 38 und die Gerätetypbezeichnung 20 genutzt werden, um das Teillayout 42 zu erstellen. Das Teillayout 42 umfasst zumindest Relativpositionen, Abmessungen und Farben für die Informationen des erstellten Inhalts 38, der im Teillayout 42 berücksichtigt wird.

Grundsätzlich stellt das Teillayout 42 zumindest eine Teilkomponente der gesamten Gerätekennzeichnung 12 dar, die das Gerät 14 kennzeichnet. Insofern kann die Gerätekennzeichnung 12 mehrere Teillayouts 42 umfassen, die beispielsweise unterschiedlichen Seiten bzw. Bereichen des Geräts 14 zugeordnet sind.

Beispielsweise kann ein Gerät 14 unterschiedliche Außenbereiche aufweisen, in denen eine Gerätekennzeichnung 12 teilweise angeordnet werden kann. Jedoch können die Informationen der Gerätekennzeichnung 12 derart mannigfaltig sein, dass sie nicht innerhalb eines einzelnen Teillayouts 42 auf dem Gerät 14 angeordnet werden können. Deshalb kann die Gerätekennzeichnung 12 in unterschiedliche Teillayouts 42 separiert werden, die jeweils einzeln auf das Gerät 14 aufzubringen sind.

Das Teillayout 42 kann dabei basierend auf einem Template erstellt werden, wobei das entsprechende Template aus einer Menge von Templates für Teillayouts 42 für unterschiedliche Gerätetypen ausgewählt worden ist.

Basierend auf dem wenigstens einen Teillayout 42 erstellt die Regelungsvorrichtung 18 dann die Gerätekennzeichnung 12 in digitaler Weise, sodass die Gerätekennzeichnung 12 als Datensatz zur Verfügung steht. Hierbei kann eine Zielgeometrie des Teillayouts 42 berücksichtigt werden, um die Informationen des Inhalts 38 innerhalb des Teillayouts 42 anzuordnen.

Die Regelungsvorrichtung 18 kann die Gerätekennzeichnung 12 über die Kommunikationsschnittstelle 16 dem Kunden bzw. Hersteller zur Verfügung stellen, sodass die Freigabe 40 für die insgesamt erstellte Gerätekennzeichnung 12 erfolgt. Die Gerätekennzeichnung 12 liegt also als Datensatz vor, was über die Kommunikationsschnittstelle 16 entsprechend

In Abhängigkeit der Freigabe 40 kann die Regelungsvorrichtung 18 in der Folge den Datensatz der zu erstellenden Gerätekennzeichnung 12 an eine Produktionsvorrichtung 44 des Systems 10 übermitteln.

Die Produktionsvorrichtung 44 ist eingerichtet, basierend auf dem Datensatz der zu erstellenden Gerätekennzeichnung 12 die tatsächliche physische Gerätekennzeichnung 12 zu produzieren.

Dabei wird innerhalb des Datensatzes auch festgelegt, wie die Gerätekennzeichnung 12 zu produzieren ist, beispielsweise hinsichtlich entsprechender Teillayouts 42 und/oder zu berücksichtigenden Produktionstechniken. Beispielsweise kann die Produktionsvorrichtung 44 eingerichtet sein, die Gerätekennzeichnung 12 mittels eines Druckverfahrens, eines Nadelns, eines Ätzens, eines Laserns oder eines Prägens herzustellen.

Dabei kann die Gerätekennzeichnung 12 unmittelbar auf das Gerät 14 selbst aufgebracht werden oder, wie hier gezeigt, auf einem separaten Informationsträger 46 aufgebracht werden, der beispielsweise am Gerät 14 angebracht wird. In jedem Fall ist so sichergestellt, dass die sicherheits- bzw. betriebsrelevante Information 26 und/oder die Produktinformation 28 des Geräts 14 physisch am Gerät 14 vorgesehen ist.

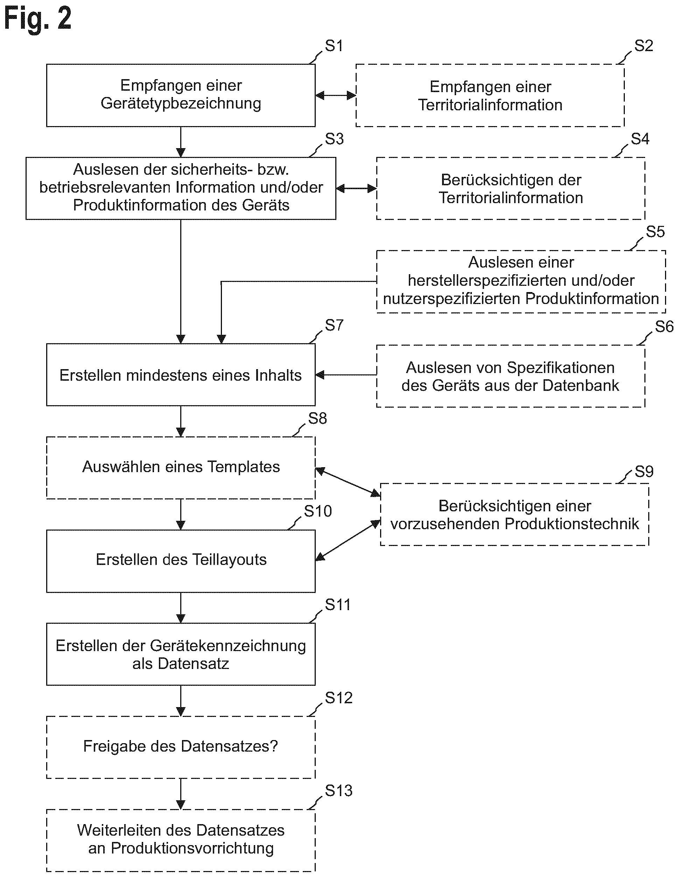

Fig. 2 zeigt ein computerimplementiertes Verfahren zum Erstellen der Gerätekennzeichnung 12 für das Gerät 14 gemäß einer Ausführungsform, wobei das Verfahren vom System 10 gemäß Fig. 1 ausgeführt werden kann. Optionale Schritte sind gestrichelt dargestellt.

Im Schritt S1 des Verfahrens wird durch die Regelungsvorrichtung 18 eine Gerätetypbezeichnung 20 des Geräts 14 anhand einer Nutzereingabe oder von einer externen Komponente empfangen.

Der Schritt S1 kann dabei durch den optionalen Schritt S2 weitergebildet werden, indem die Regelungsvorrichtung 18 eine der Gerätetypbezeichnung 20 zugeordnete Territorialinformation 22 empfängt und im weiteren Verlauf des Verfahrens berücksichtigt. Die Territorialinformation 22 kann auch als Teil der Gerätetypbezeichnung 20 des Geräts 14 vorgesehen sein.

Im Anschluss an den Schritt S1 umfasst das Verfahren den Schritt S3, in dem von der Regelungsvorrichtung 18 zumindest eine von der Gerätetypbezeichnung 20 abhängige sicherheits- bzw. betriebsrelevante Information 26 und/oder eine Produktinformation 28 des Geräts 14 aus zumindest einer Datenbank 24 ausgelesen wird. Welche spezifischen Informationen aus der Datenbank 24 auszulesen ist, kann dabei insbesondere durch ein erstes Regelwerk 34A festgelegt sein, das die Regelungsvorrichtung 18 nutzt.

Der Schritt S3 kann durch den optionalen Schritt S4 weitergebildet werden, indem die Regelungsvorrichtung 18 beim Auslesen der Informationen aus der Datenbank 24 die im optionalen Schritt S2 empfangene Territorialinformation 22 berücksichtigt. Da durch die Territorialinformation 22 angegeben ist, für welches Territorium das Gerät 14 ausgelegt werden soll, kann die Regelungsvorrichtung 18 die in der Datenbank 24 anhand der Territorialinformation 22 codierten Informationen für die jeweilige Territorialinformation 22 auslesen.

In einer weiteren Alternative kann die Territorialinformation 22 durch die Regelungsvorrichtung 18 dadurch berücksichtigt werden, dass die Regelungsvorrichtung 18 die aus der Datenbank 24 ausgelesenen Informationen in eine Sprache übersetzt, die der Territorialinformation 22 zugeordnet ist. Dazu kann die Regelungsvorrichtung 18 beispielsweise Gebrauch von dem Übersetzungsalgorithmus 36 machen.

Neben dem Schritt S3 kann auch der optionale Schritt S5 vorgesehen sein, gemäß dem die Regelungsvorrichtung 18 aus der Datenbank 24 auch hersteller- bzw. kundenspezifizierte Informationen 32 ausliest. So ist eine Individualisierung der Gerätekennzeichnung 12 möglich.

Auch kann das Verfahren den optionalen Schritt S6 aufweisen, in dem die Regelungsvorrichtung 18 aus der Datenbank 24 Spezifikationen 30 ausliest, die in der Datenbank 24 anhand der Gerätetypbezeichnung 20 codiert sind.

Nachfolgend umfasst das Verfahren den Schritt S7, in dem die Regelungsvorrichtung 18 mindestens einen Inhalt 38 basierend auf der Gerätetypbezeichnung 20 und der zumindest einen von der Gerätetypbezeichnung 20 abhängigen sicherheits- bzw. betriebsrelevanten Information 26 und/oder der Produktinformation 28 des Geräts 14 unter Berücksichtigung von durch die Gerätetypbezeichnung 20 definierten gerätetypspezifischen Anforderungen erstellt. In diesem Zusammenhang sind die gerätetypspezifischen Anforderungen durch die Gerätetypbezeichnung 20 codiert. Die gerätetypspezifischen Anforderungen geben an, welche Informationen in welcher Weise in dem erstellten Inhalt 38 zu berücksichtigen sind.

Die Erstellung des Inhalts 38 durch die Regelungsvorrichtung 18 kann ebenfalls basierend auf einem Regelwerk 34, beispielsweise einem dritten Regelwerk 34C erfolgen. Dadurch wird eine Automatisierung der Erstellung des Inhalts 38 ermöglicht.

Im nachfolgenden Schritt S8 des computerimplementierten Verfahrens kann durch die Regelungsvorrichtung 18 zumindest ein Template für das Teillayout 42 der Gerätekennzeichnung 12 basierend auf der empfangenen Gerätetypbezeichnung 20 ausgewählt werden, insbesondere aus einer Menge verschiedener Templates für unterschiedliche Gerätetypen.

Der Auswahl des Templates für das Teillayouts 42 kann ebenfalls ein Regelwerk 34 zugrunde liegen, das von der Regelungsvorrichtung 18 angewendet wird, insbesondere ein viertes Regelwerk 34D.

Der Schritt S8 kann durch den optionalen Schritt S9 weitergebildet werden, in dem die Regelungsvorrichtung 18 bei der Auswahl des Templates für das Teillayout 42 eine für das Teillayout 42 vorzusehende Produktionstechnik berücksichtigt. Die vorzusehende Produktionstechnik ist durch die Gerätetypbezeichnung 20 codiert. Beispielsweise kann im Falle, dass die vorzusehende Produktionstechnik ein Druckverfahren ist, das Template für das Teillayout 42 derart ausgewählt werden, dass ihm ein bedruckbares Medium zugrunde liegt.

Im Schritt S10 erstellt die Regelungsvorrichtung 18 mindestens ein Teillayout 42 der Gerätekennzeichnung 12 abhängig von dem mindestens einen Inhalt 38 und der von der Gerätetypbezeichnung 20 abhängigen sicherheits- bzw. betriebsrelevanten Information 26 und/oder der Produktinformation 28 des Geräts 14. Zudem kann das zumindest eine ausgewählte Template für das Teillayout 42 beim Erstellen des Teillayouts 42 berücksichtigt werden. Dabei kann von der Regelungsvorrichtung 18 ebenfalls ein Regelwerk 34 verwendet werden, beispielsweise ein fünftes Regelwerk 34E. Innerhalb des Schritts S10 wird der Inhalt 38 mit dem Teillayout 42 verknüpft.

Ferner kann beim Erstellen des Teillayouts 42 die vorzusehende Produktionstechnik entsprechend berücksichtigt werden, wie zuvor schon für die Auswahl des entsprechenden Templates erläutert wurde.

Das Verfahren weist den nachfolgenden Schritt S11 auf, in dem die Regelungsvorrichtung 18 die Gerätekennzeichnung 12 erstellt.

Dabei wird der mindestens eine erstellte Inhalt 38 entsprechend einer Zielgeometrie des zumindest einen erstellten Teillayouts 42 innerhalb des Teillayouts 42 angeordnet. Die Zielgeometrie kann anhand der Spezifikationen 30 definiert sein.

Auch der Erstellung der Gerätekennzeichnung 12 kann ein Regelwerk 34 zugrunde liegen, beispielsweise ein zweites Regelwerk 34B an, das angibt, in welcher Weise der erstellte Inhalt 38 innerhalb des ausgewählten Teillayouts 42 anzuordnen ist.

Dadurch wird ein computerimplementiertes Verfahren geschaffen, mittels dem eine Gerätekennzeichnung 12 insbesondere automatisiert erstellt werden kann.

Insofern liegt die zu erstellende Gerätekennzeichnung 12 bislang lediglich als digitaler Datensatz vor.

Im nachfolgenden optionalen Schritt S12 stellt die Regelungsvorrichtung 18 den Datensatz der zu erstellenden Gerätekennzeichnung 12 für die Kommunikationsschnittstelle 16 bereit und prüft, ob hinsichtlich des Datensatzes der zu erstellenden Gerätekennzeichnung 12 eine Freigabe 40 vorliegt.

Liegt keine Freigabe 40 vor, so kann das Verfahren abgebrochen werden.

In einer Alternative kann das Verfahren entsprechend der Schritte S3 bis S12 auch wiederholt werden, falls keine Freigabe 40 innerhalb eines definierten Zeitraums bzw. eine Ablehnung vorliegt, insbesondere wenn spezifiziert wird, im Hinblick auf welchen Teilaspekt die zu erstellende Gerätekennzeichnung 12 anzupassen ist. Auf Basis dieser Information kann die Regelungsvorrichtung 18 das Verfahren der Schritte S3 bis S12 erneut ausführen und die Gerätekennzeichnung 12 anpassen.

Liegt eine Freigabe 40 vor, so kann das Verfahren durch die Regelungsvorrichtung 18 mit dem Schritt S13 fortgeführt werden, in dem die Regelungsvorrichtung 18 den Datensatz der zu erstellenden Gerätekennzeichnung 12 nutzt, um ein physisches Erstellen der Gerätekennzeichnung 12 zu initiieren. Um die Gerätekennzeichnung 12 in der realen Welt tatsächlich physisch zu erstellen, kann die Regelungsvorrichtung 18 insbesondere den Datensatz der zu erstellenden Gerätekennzeichnung 12 an eine Produktionsvorrichtung 44 übermitteln.

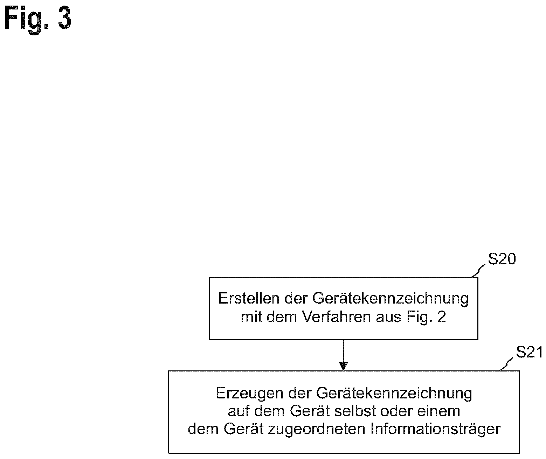

Fig. 3 zeigt ein Verfahren zum physischen Erzeugen der Gerätekennzeichnung 12 gemäß einer Ausführungsform.

Im Schritt S20 wird die Gerätekennzeichnung 12 gemäß dem mit Bezug auf Fig. 2 beschriebenen Verfahren erstellt, sodass diese als Datensatz vorliegt.

Im nachfolgenden Schritt S21 wird der Datensatz an die Produktionsvorrichtung 44 übermittelt, die die Gerätekennzeichnung 12 auf einem dem Gerät 14 zugeordneten Informationsträger 46 oder auf dem Gerät 14 selbst in physischer Weise erzeugt.

Es ist somit sichergestellt, dass die Gerätekennzeichnung 12 in automatisierter Weise erzeugt werden kann, insbesondere für verschiedene Geräte 14. Zudem kann ohne manuelles Eingreifen auf veränderte Informationen reagiert werden, die in der Gerätekennzeichnung 12 zu berücksichtigen sind.

## Patentansprüche

1. Computerimplementiertes Verfahren zum Erstellen einer Gerätekennzeichnung (12) für ein Gerät (14), wobei das Verfahren zumindest die folgenden Schritte aufweist:
- Empfangen einer Gerätetypbezeichnung (20) des Geräts (14) anhand einer Nutzereingabe oder von einer externen Komponente,
- Auslesen zumindest einer von der Gerätetypbezeichnung (20) abhängigen sicherheits- und/oder betriebsrelevanten Information (26) und/oder einer Produktinformation (28) des Geräts (14) aus zumindest einer Datenbank (24),
- Erstellen mindestens eines Inhalts (38) basierend auf der Gerätetypbezeichnung (20) und der zumindest einen von der Gerätetypbezeichnung (20) abhängigen sicherheits- und/oder betriebsrelevanten Information (26) und/oder der Produktinformation (28) des Geräts (14) unter Berücksichtigung von durch die Gerätetypbezeichnung (20) definierten gerätetypspezifischen Anforderungen,
- Erstellen zumindest eines Teillayouts (42) der Gerätekennzeichnung (12) basierend auf der Gerätetypbezeichnung (20) und dem mindestens einen Inhalt (38), und
- Erstellen der Gerätekennzeichnung (12), wobei der mindestens eine erstellte Inhalt (38) entsprechend einer Zielgeometrie des zumindest einen erstellten Teillayouts (42) innerhalb des Teillayouts (42) angeordnet wird.

2. Computerimplementiertes Verfahren nach Anspruch 1, **dadurch gekennzeichnet, dass** die sicherheits- und/oder betriebsrelevante Information (26) und/oder die Produktinformation (28) basierend auf einem von der Gerätetypbezeichnung (20) abhängigen ersten Regelwerk (34A) aus einer durch das erste Regelwerk (34A) spezifizierten Datenbank (24) ausgelesen wird.

3. Computerimplementiertes Verfahren nach Anspruch 1 oder 2, **dadurch gekennzeichnet, dass** der zumindest eine erstellte Inhalt (38) basierend auf einem von der Gerätetypbezeichnung (20) abhängigen zweiten Regelwerk (34B) innerhalb des Teillayouts (42) angeordnet wird.

4. Computerimplementiertes Verfahren nach einem der vorherigen Ansprüche, **dadurch gekennzeichnet, dass** Spezifikationen (30) des Geräts (14) basierend auf der Gerätetypbezeichnung (20) aus zumindest einer Datenbank (24) ausgelesen werden, wobei die Spezifikationen (30) des Geräts (14) zumindest die Zielgeometrie des Teillayouts (42) der Gerätekennzeichnung (12) vorgeben.

5. Computerimplementiertes Verfahren nach einem der vorherigen Ansprüche, **dadurch gekennzeichnet, dass** die Zielgeometrie Abmessungen des Teillayouts (42) und/oder eine beim Erstellen der Gerätekennzeichnung (12) vorzusehende Produktionstechnik angibt.

6. Computerimplementiertes Verfahren nach einem der vorherigen Ansprüche, **dadurch gekennzeichnet, dass** das zumindest eine Teillayout (42) basierend auf einer vorzusehenden Produktionstechnik erstellt wird, wobei die vorzusehende Produktionstechnik unter anderem von der empfangenen Gerätetypbezeichnung (20) abhängt.

7. Computerimplementiertes Verfahren nach einem der vorherigen Ansprüche, **dadurch gekennzeichnet, dass** hinsichtlich der zumindest einen von der Gerätetypbezeichnung (20) abhängigen sicherheits- und/oder betriebsrelevanten Information (26) und/oder der Produktinformation (28) eine Territorialinformation (22) berücksichtigt wird, und/oder dass der zumindest eine erstellte Inhalt (38) in einem von der Territorialinformation (22) abhängigen Teillayout (42) entsprechend einer von der Territorialinformation (22) abhängigen Zielgeometrie angeordnet wird.

8. Computerimplementiertes Verfahren nach einem der vorherigen Ansprüche, **dadurch gekennzeichnet, dass** das Teillayout (42) zumindest Relativpositionen, Abmessungen und Farben für den zumindest einen erstellten Inhalt (38) umfasst.

9. Computerimplementiertes Verfahren nach einem der vorherigen Ansprüche, **dadurch gekennzeichnet, dass** zusätzlich zumindest eine von der Gerätetypbezeichnung (20) abhängige hersteller- und/oder kundenspezifizierte Information (32) aus zumindest einer Datenbank (24) ausgelesen und in dem Teillayout (42) der Gerätekennzeichnung (12) angeordnet wird.

10. Computerimplementiertes Verfahren nach einem der vorherigen Ansprüche, **dadurch gekennzeichnet, dass** die Gerätekennzeichnung (12) basierend auf mehreren Teillayouts (42) erstellt wird, wobei die mehreren Teillayouts (42) zumindest gemeinschaftlich die sicherheits- und/oder betriebsrelevante Information (26) und/oder die Produktinformation (28) aufweisen.

11. Computerimplementiertes Verfahren nach einem der vorherigen Ansprüche, **dadurch gekennzeichnet, dass** die Schritte automatisch ausgeführt werden.

12. Computerimplementiertes Verfahren nach einem der vorherigen Ansprüche, **dadurch gekennzeichnet, dass** die Gerätekennzeichnung (12) als Datensatz an eine Produktionsvorrichtung (44) übermittelt wird.

13. Computerimplementiertes Verfahren nach Anspruch 12, **dadurch gekennzeichnet, dass** der Datensatz nur dann an die Produktionsvorrichtung (44) übermittelt wird, wenn die Gerätekennzeichnung (12) zuvor durch eine Freigabe (40) bestätigt worden ist.

14. Verfahren zum Erzeugen einer Gerätekennzeichnung (12), wobei die Gerätekennzeichnung (12) gemäß dem computerimplementierten Verfahren nach einem der vorhergehenden Ansprüche erstellt worden ist, und wobei die Gerätekennzeichnung (12) auf einem dem Gerät (14) zugeordneten Informationsträger (46) oder auf dem Gerät (14) selbst erzeugt wird.

15. System (10) zum Erstellen einer Gerätekennzeichnung (12) für ein Gerät (14), wobei das System (10) eine Regelungsvorrichtung (18) aufweist, wobei die Regelungsvorrichtung (18) eingerichtet ist,
- eine Gerätetypbezeichnung (20) des Geräts (14) anhand einer Nutzereingabe oder von einer externen Komponente zu empfangen,
- zumindest eine von der Gerätetypbezeichnung (20) abhängige sicherheits- und/oder betriebsrelevante Information (26) und/oder eine Produktinformation (28) des Geräts (14) aus zumindest einer Datenbank (24) auszulesen,
- mindestens einen Inhalt (38) basierend auf der Gerätetypbezeichnung (20) und der zumindest einen von der Gerätetypbezeichnung (20) abhängigen sicherheits- und/oder betriebsrelevanten Information (26) und/oder der Produktinformation (28) des Geräts (14) unter Berücksichtigung von durch die Gerätetypbezeichnung (20) definierten gerätetypspezifischen Anforderungen zu erstellen,
- zumindest ein Teillayout (42) der Gerätekennzeichnung (12) basierend auf der Gerätetypbezeichnung (20) und dem mindestens einen Inhalt (38) zu erstellen, und
- die Gerätekennzeichnung (12) derart zu erstellen, dass der zumindest eine erstellte Inhalt (38) entsprechend einer Zielgeometrie des zumindest einen erstellten Teillayouts (42) innerhalb des Teillayouts (42) angeordnet wird.

## Geänderte Patentansprüche

### Geänderte Patentansprüche gemäss Regel 137(2) EPÜ.

1. Computerimplementiertes Verfahren zum Erstellen einer Gerätekennzeichnung (12) für ein Gerät (14), wobei das Verfahren zumindest die folgenden Schritte aufweist:
- Empfangen einer Gerätetypbezeichnung (20) des Geräts (14) anhand einer Nutzereingabe oder von einer externen Komponente,
- Auslesen zumindest einer von der Gerätetypbezeichnung (20) abhängigen sicherheits- und/oder betriebsrelevanten Information (26) und/oder einer Produktinformation (28) des Geräts (14) aus zumindest einer Datenbank (24),
- Erstellen mindestens eines Inhalts (38) basierend auf der Gerätetypbezeichnung (20) und der zumindest einen von der Gerätetypbezeichnung (20) abhängigen sicherheits- und/oder betriebsrelevanten Information (26) und/oder der Produktinformation (28) des Geräts (14) unter Berücksichtigung von durch die Gerätetypbezeichnung (20) definierten gerätetypspezifischen Anforderungen,
- Erstellen zumindest eines Teillayouts (42) der Gerätekennzeichnung (12) basierend auf der Gerätetypbezeichnung (20) und dem mindestens einen Inhalt (38), und
- Erstellen der Gerätekennzeichnung (12), wobei der mindestens eine erstellte Inhalt (38) entsprechend einer Zielgeometrie des zumindest einen erstellten Teillayouts (42) innerhalb des Teillayouts (42) angeordnet wird
wobei die Gerätetypbezeichnung (20) als Codierung genutzt wird, um festzulegen, welche sicherheits- und/oder betriebsrelevante Information (26) und/oder welche Produktinformation (28) zu verwenden und welches Teillayout (42) zu nutzen ist, und
wobei die sicherheits- und/oder betriebsrelevante Information (26) und/oder die Produktinformation (28) basierend auf einem von der Gerätetypbezeichnung (20) abhängigen ersten Regelwerk (34A) aus einer durch das erste Regelwerk (34A) spezifizierten Datenbank (24) ausgelesen wird.

2. Computerimplementiertes Verfahren nach Anspruch 1, **dadurch gekennzeichnet, dass** der zumindest eine erstellte Inhalt (38) basierend auf einem von der Gerätetypbezeichnung (20) abhängigen zweiten Regelwerk (34B) innerhalb des Teillayouts (42) angeordnet wird.

3. Computerimplementiertes Verfahren nach Anspruch 1 oder 2, **dadurch gekennzeichnet, dass** Spezifikationen (30) des Geräts (14) basierend auf der Gerätetypbezeichnung (20) aus zumindest einer Datenbank (24) ausgelesen werden, wobei die Spezifikationen (30) des Geräts (14) zumindest die Zielgeometrie des Teillayouts (42) der Gerätekennzeichnung (12) vorgeben.

4. Computerimplementiertes Verfahren nach einem der vorherigen Ansprüche, **dadurch gekennzeichnet, dass** die Zielgeometrie Abmessungen des Teillayouts (42) und/oder eine beim Erstellen der Gerätekennzeichnung (12) vorzusehende Produktionstechnik angibt.

5. Computerimplementiertes Verfahren nach einem der vorherigen Ansprüche, **dadurch gekennzeichnet, dass** das zumindest eine Teillayout (42) basierend auf einer vorzusehenden Produktionstechnik erstellt wird, wobei die vorzusehende Produktionstechnik unter anderem von der empfangenen Gerätetypbezeichnung (20) abhängt.

6. Computerimplementiertes Verfahren nach einem der vorherigen Ansprüche, **dadurch gekennzeichnet, dass** hinsichtlich der zumindest einen von der Gerätetypbezeichnung (20) abhängigen sicherheits- und/oder betriebsrelevanten Information (26) und/oder der Produktinformation (28) eine Territorialinformation (22) berücksichtigt wird, und/oder dass der zumindest eine erstellte Inhalt (38) in einem von der Territorialinformation (22) abhängigen Teillayout (42) entsprechend einer von der Territorialinformation (22) abhängigen Zielgeometrie angeordnet wird.

7. Computerimplementiertes Verfahren nach einem der vorherigen Ansprüche, **dadurch gekennzeichnet, dass** das Teillayout (42) zumindest Relativpositionen, Abmessungen und Farben für den zumindest einen erstellten Inhalt (38) umfasst.

8. Computerimplementiertes Verfahren nach einem der vorherigen Ansprüche, **dadurch gekennzeichnet, dass** zusätzlich zumindest eine von der Gerätetypbezeichnung (20) abhängige hersteller- und/oder kundenspezifizierte Information (32) aus zumindest einer Datenbank (24) ausgelesen und in dem Teillayout (42) der Gerätekennzeichnung (12) angeordnet wird.

9. Computerimplementiertes Verfahren nach einem der vorherigen Ansprüche, **dadurch gekennzeichnet, dass** die Gerätekennzeichnung (12) basierend auf mehreren Teillayouts (42) erstellt wird, wobei die mehreren Teillayouts (42) zumindest gemeinschaftlich die sicherheits- und/oder betriebsrelevante Information (26) und/oder die Produktinformation (28) aufweisen.

10. Computerimplementiertes Verfahren nach einem der vorherigen Ansprüche, **dadurch gekennzeichnet, dass** die Schritte automatisch ausgeführt werden.

11. Computerimplementiertes Verfahren nach einem der vorherigen Ansprüche, **dadurch gekennzeichnet, dass** die Gerätekennzeichnung (12) als Datensatz an eine Produktionsvorrichtung (44) übermittelt wird.

12. Computerimplementiertes Verfahren nach Anspruch 11, **dadurch gekennzeichnet, dass** der Datensatz nur dann an die Produktionsvorrichtung (44) übermittelt wird, wenn die Gerätekennzeichnung (12) zuvor durch eine Freigabe (40) bestätigt worden ist.

13. Verfahren zum Erzeugen einer Gerätekennzeichnung (12), wobei die Gerätekennzeichnung (12) gemäß dem computerimplementierten Verfahren nach einem der vorhergehenden Ansprüche erstellt worden ist, und wobei die Gerätekennzeichnung (12) auf einem dem Gerät (14) zugeordneten Informationsträger (46) oder auf dem Gerät (14) selbst erzeugt wird.

14. System (10) zum Erstellen einer Gerätekennzeichnung (12) für ein Gerät (14), wobei das System (10) eine Regelungsvorrichtung (18) aufweist, wobei die Regelungsvorrichtung (18) eingerichtet ist,
- eine Gerätetypbezeichnung (20) des Geräts (14) anhand einer Nutzereingabe oder von einer externen Komponente zu empfangen,
- zumindest eine von der Gerätetypbezeichnung (20) abhängige sicherheits- und/oder betriebsrelevante Information (26) und/oder eine Produktinformation (28) des Geräts (14) aus zumindest einer Datenbank (24) auszulesen,
- mindestens einen Inhalt (38) basierend auf der Gerätetypbezeichnung (20) und der zumindest einen von der Gerätetypbezeichnung (20) abhängigen sicherheits- und/oder betriebsrelevanten Information (26) und/oder der Produktinformation (28) des Geräts (14) unter Berücksichtigung von durch die Gerätetypbezeichnung (20) definierten gerätetypspezifischen Anforderungen zu erstellen,
- zumindest ein Teillayout (42) der Gerätekennzeichnung (12) basierend auf der Gerätetypbezeichnung (20) und dem mindestens einen Inhalt (38) zu erstellen, und
die Gerätekennzeichnung (12) derart zu erstellen, dass der zumindest eine erstellte Inhalt (38) entsprechend einer Zielgeometrie des zumindest einen erstellten Teillayouts (42) innerhalb des Teillayouts (42) angeordnet wird,
wobei die Gerätetypbezeichnung (20) als Codierung genutzt wird, um festzulegen, welche sicherheits- und/oder betriebsrelevante Information (26) zu verwenden und welches Teillayout (42) zu nutzen ist, und
wobei die sicherheits- und/oder betriebsrelevante Information (26) und/oder die Produktinformation (28) basierend auf einem von der Gerätetypbezeichnung (20) abhängigen ersten Regelwerk (34A) aus einer durch das erste Regelwerk (34A) spezifizierten Datenbank (24) ausgelesen wird.
